(19) Europäisches Patentamt
European Patent Office
Office européen des brevets

(11) **EP 2 637 398 A1**

(12) **EUROPEAN PATENT APPLICATION**

(43) Date of publication:
**11.09.2013 Bulletin 2013/37**

(51) Int Cl.:
***H04N 5/232*** (2006.01)

(21) Application number: **12158883.4**

(22) Date of filing: **09.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BlackBerry Limited Waterloo ON N2L 3W8 (CA)**

(72) Inventors:
• **Eaton, Eric Thomas Sunrise, FL Florida 33323 (US)**

• **Hayes, David Jeffrey Sunrise, FL Florida 33323 (US)**
• **Holman IV, Martin Earl Sunrise, FL Florida 33323 (US)**

(74) Representative: **Fennell, Gareth Charles et al Kilburn & Strode LLP 20 Red Lion Street London WC1R 4PJ (GB)**

(54) **Managing two or more displays on a device with camera**

(57)    What is disclosed is a novel device and method to manage displays (106, 206) in a device (100) with a camera (112, 212). In one example, a first display (106) is on a first side (104) of the wireless device and a second display (206) along with a camera (212) is on the second side (204) of the device. A facial detector (306, FIG. 5, FIG. 6) detects a presence of a human face in an image captured by the camera. A power control circuit (316, FIG. 5, FIG. 6) turns on the first display (106) and/or second display (206) in response to receiving a signal from the facial detector (306, FIG. 5, FIG. 6) that a human face is detected. In a further example, a matching algorithm is (306, 312, FIG. 5, FIG. 6) used to determine if the human face in front of the camera matches a previously stored human face. In response to a match being found, an image associated with the previous stored human face is presented on the second display (206).

FIG. 1

200

212    214    120

209

206

204

102

FIG. 2

**Description**

**FIELD OF THE DISCLOSURE**

The present disclosure generally relates to electronic devices that have a display and a camera, and more particularly to managing such electronic devices that have a plurality of displays.

**BACKGROUND**

Electronic devices with cameras generally have a front facing display mounted on the opposite side of the device than the camera faces to show the user what the camera is seeing. However, other electronic devices with cameras often include more than one display. For example, some cameras use a back facing display that is on the same side as the camera faces to show a preview for self-portraits. Another use of the back facing display is to display a count-down timer when a self-timer function is enabled.

However, displays consume power and reduce battery life. The use of multiple displays consumes power at a quicker rate. Balancing the increase functionality of using more than one display while maintaining longer battery life is difficult. Moreover, when taking group photos and self- portraits, the time period of count- down timers is often either too long or too short, thereby resulting in the photograph being taken at a time when the subject may not be prepared for the photo. Settable count- down time periods are often cumbersome for users to manage.

**BRIEF DESCRIPTION OF THE DRAWINGS**

The accompanying figures where like reference numerals refer to identical or functionally similar elements throughout the separate views, and which together with the detailed description below are incorporated in and form part of the specification, serve to further illustrate various examples and to explain various principles and advantages all in accordance with the present disclosure, in which:

FIG. 1 illustrates a front view of an electronic device according to one example;

FIG. 2 illustrates a back view of the electronic device of FIG. 1 according to one example;

FIG. 3 illustrates a functional diagram of a display control circuit according to one example;

FIG. 4 illustrates a table of previously associated images with facial identification according to one example;

FIG. 5 and FIG. 6 is a flow diagram illustrating the display cooperation processes according to one example; and

FIG. 7 is one example of a block diagram of an electronic device and associated components in which the systems and methods disclosed herein may be implemented.

**DETAILED DESCRIPTION**

As required, detailed examples are disclosed herein. However, it is to be understood that the disclosed embodiments are merely examples and that the systems and methods described below can be embodied in various forms. Therefore, specific structural and functional details disclosed herein are not to be interpreted as limiting, but merely as a basis for the claims and as a representative basis for teaching one skilled in the art to variously employ the disclosed subject matter in virtually any appropriately detailed structure and function. Further, the terms and phrases used herein are not intended to be limiting, but rather, to provide an understandable description.

The terms "a" or "an", as used herein, are defined as one or more than one. The term plurality, as used herein, is defined as two or more than two. The term another, as used herein, is defined as at least a second or more. The terms "including" and "having," as used herein, are defined as comprising (i.e., open language). The term "coupled," as used herein, is defined as "connected," although not necessarily directly, and not necessarily mechanically. The term "configured to" describes hardware, software or a combination of hardware and software that is adapted to, set up, arranged, built, composed, constructed, designed or that has any combination of these characteristics to carry out a given function. The term "adapted to" describes hardware, software or a combination of hardware and software that is capable of, able to accommodate, to make, or that is suitable to carry out a given function.

Described below are systems and methods for reducing power consumption in electronic devices that have cameras and more than one display. In one example, an electronic device includes a first side with a first display and a second side with a second display and a camera. A facial detection circuit detects a presence of a human face in an image captured by the camera. In response to a human face being detected, a signal is sent to a power control circuit to turn on one or more of the displays. In operation, a display that is mounted on the same side of a device as the camera is able to be activated only when an image captured by the camera indicates that a person is on that side of the device and is therefore likely to view the display. Conversely, if a face is not detected in an image captured by the camera, the display on the same side of the device as the camera is not powered on, and therefore electrical energy is not wasted in operating that display when it is unlikely that a person is in front of the camera, and therefore viewing that display.

In a further example, when a human face is detected, a matching algorithm is used to determine if the human face detected matches a previously stored human face. In response to a match being found, an image associated with the previously stored human face is presented on one or more of the displays. For example, in response to the stored human face being matched as being "grandma", an image associated with "grandma" is displayed. This image may be locally stored on the electronic device or retrieved, for example wirelessly, from a social networking site of favorite pictures of "grandma". Examples of pictures associated with "grandma" include grandchildren, family, vacation photos, pets, etc.

In another example, a facial detection circuit analyzes images captured by a camera to detect a presence of a human face in the image. An audio recognition is used to detect an audio command, such as a "hand clap" or a voice command such as saying "cheese." In response to a face being detected while an audio command is recognized, a signal is sent to capture and record a photo.

In a further example, facial detection is performed on images captured by the camera to determine the presence of a group of two or more human faces in front of the camera. In such an example, a count-down timer is activated in response to an audio command being recognized. Once the count-down timer completes, a signal is sent to capture and record a photo. This example allows a group of people to assemble, setup, and pose for the count-down time to snap a picture in response to an audio command. In one example, the count-down time is able to be adjusted based upon, for example, a number of faces detected in the image.

In yet another example, facial detection is used to determine a group of two or more human faces in front of the camera. A silhouette identifier is used to snap a picture when the silhouette of the group is centered in front of the camera with or without the use of a count-down timer.

Example Electronic Device

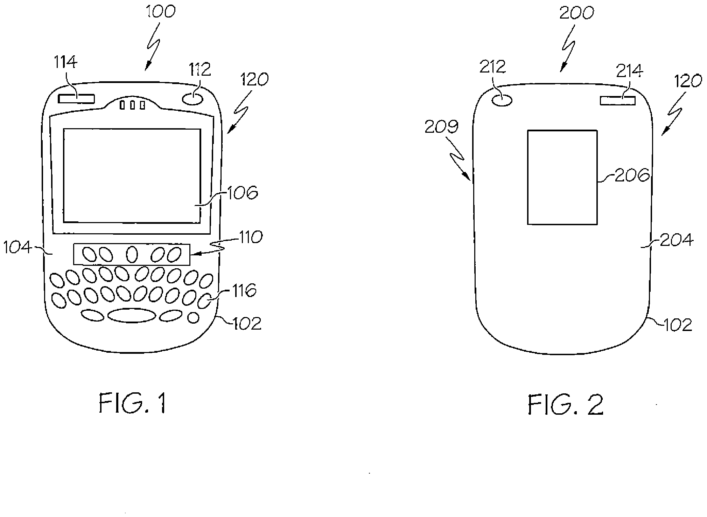

FIG. 1 depicts a front view 100 of an electronic device 120 according to one example. The electronic device 120 includes a housing 102 to enclose electronic circuits, power sources, and possibly other components of the electronic device. The electronic device 120 has a keyboard 116 and various user interface components 110 mounted on its front side 104. Examples of the user interface components 110 mounted on the front side 104 of the electronic device 120 include trackballs, track pads, function keys that have a fixed definition, reconfigurable, programmable definitions, or both, etc.

The electronic device of this example includes a display 106 mounted on its front or first side 104. The display 106 of various examples is able to include a graphical display that presents images in a color or in a monochrome format. In one example, the display 106 is a liquid crystal display (LCD) that presents graphical data, including alpha-numeric data.

The illustrated electronic device 120 includes a front facing camera 112 and a front light sensor 114. Front facing camera 112 is generally used to capture images as photographs or as video to support, for example, video conferencing. The light sensor 114 of one example produces an output in proportion to the amount of ambient light incident on the light sensor 114, In some examples, the light sensor 114 is a photo diode, phototransistor, or other light sensitive electronic device that produces an output that is measured to determine an estimate of ambient light. In various examples, an electronic device or other electronic device includes only one ambient light detecting device, two ambient light sensing devices, or any number of ambient light sensing devices to support the below-described operations.

FIG. 2 illustrates a back view 200 of the electronic device 120 discussed above with regard to FIG. 1. The back view 200 shows a back side 204 of housing 102. The back side 204 has a back facing camera 212 and back light sensor 214. In various examples, the back facing camera 212 captures images and video that are typically displayed on display 106. Also shown is a second display 206. The second display 206 of various examples is able to include a graphical display that presents images in a color or in a monochrome format. In one example, the second display 206 is a liquid crystal display (LCD) that presents graphical data, including alpha-numeric data. In various examples the type, resolution, and capabilities of the first display 106 and the second display 206 are similar to each other. In other examples, the characteristics of the first display 106 and the second display 206 are different. Moreover in one example, the characteristics of the front facing camera 112 and back facing camera 212 are similar. In another example, the characteristics of the front facing camera 112 and back facing camera 212 are different. Examples of camera characteristics include camera detector/lens types, resolution, other capabilities, or a combination thereof.

Example Display Control Circuit

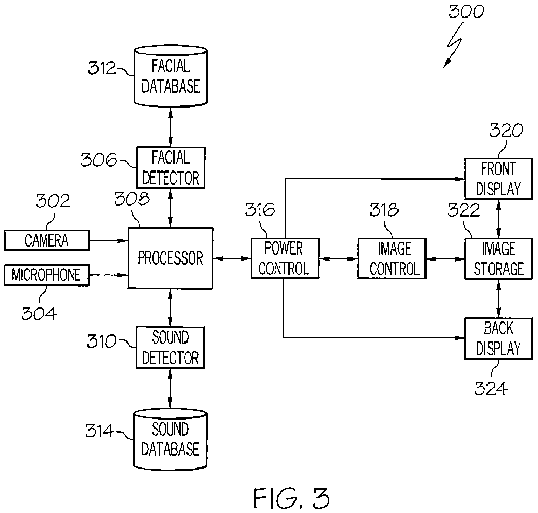

FIG. 3 illustrates a block diagram of a display control circuit 300 according to one example. The display control circuit 300 includes a camera 302, a microphone 304 and two displays: a front display 320 and a back display 324. In other examples, the invention is implemented with more than two displays.

The camera 302 operates to capture images for either still pictures or video. Images captured by camera 302 are managed by processor 308. Images received by the processor 308 are provided to and analyzed by a facial detector 306 to identify human faces located in front of the camera 302 and captured by the camera 302. As discussed above with regard to FIG. 1 and FIG. 2, the camera 302 may be a front facing camera 112, a back facing camera 212, or a combination of both. The facial detector 306 analyses images captured by the camera 302 and determines locations and sizes of human faces in those arbitrary captured digital images. In an example, the facial detector 302 detects facial features and excludes other features, such as buildings, trees and bodies. Various algorithms implementing a binary pattern-classification task are incorporated into the facial detector 306. That is, the content of a given part of an image is transformed into features, after which a classifier decides whether that particular region of the image is a face, or not. Classifiers in one example operate by being trained with images of example faces and are configured to identify similar characteristics in arbitrary images. In some examples, the facial detector 306 is used with facial recognition to match features by comparing selected facial features from the captured image to features stored in a facial database 310 as further describe below. The facial detector 306 in one example is configured to detect the presence of only one face in a captured image. In another example, the facial detector 306 is configured to detect the presence of two or more human faces in a group.

A power control circuit 316 is coupled to the front display 320 or the back display 324 or both. In response to the facial detector 306 detecting the presence of a human face in an image captured by the camera 302, the processor 308 sends a signal to the power control circuit 316 to turn on the front display 320 or the back display 324 or both. The management of the displays 320, 324 prolongs battery life. In one example, the detection of at least one face in an image captured by the camera 302 that is on a second side of a device causes a display on the same second side of the device to turn on. Conversely, the lack of a detected presence of a human face in an image captured by the camera 302 causes the display on the same side of the device as the camera 302 to turn off. Turning on a display that is located on the same side of the device that contains the camera 302 causes the display to automatically turn on when someone is likely to be present to observe the display, and causes the display to automatically turn off when it is unlikely that someone is likely to observe the display.

In another example, the processor 308 uses facial recognition to match features by comparing selected facial features from the captured image to features stored in a facial database 312. The image storage 322 in one example further stores images in association with specific human faces. In this example, in response to recognizing a particular human face in the captured image, previously stored images in the image storage 322 that are associated with the specific detected human face are displayed on the first display 320 or the second display 324 or both. This image may be locally stored on the electronic device or wirelessly retrieved from a social networking site.

Example Image Association Table

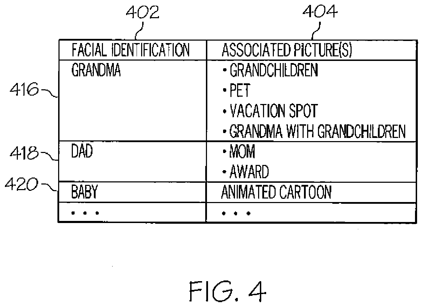

Table 400 of FIG. 4 is an example of associations of images to human faces that have been identified. Column 402 includes examples of persons with stored image features to allow identification by the processor 308 as is discussed above. Column 402 includes several individuals, who are identified as "Grandma", "Dad", and "Baby". Column 404 includes one or more images associated with each person whose image can be identified. For example, if a detected human face in a captured image is identified as "Grandma," who is listed in row 416, an image of grandchildren, a favorite pet, or other image previously associated with Grandma is displayed. In row 418, a human face identified as "Dad" is stored in association with an image of Mom or an award, such as for golf. In response to identifying a face in an image as "baby," an animated video, such as a cartoon, is able to be presented on a display on the same side as the camera to focus the attention of the young child. In order to present such an entertaining video, captured images containing detected faces identified as children or babies are associated with such animated cartoons, such as is shown in row 420. The stored images that are associated with particular individuals are able to include images of the particular identified person as well as images of other persons or of other objects. By displaying personalized images to a particular person being photographed, it is more likely that the person will react with a positive response (e.g., smile, laughing, etc.) which may be captured in subsequent images.

Returning to FIG. 3, a microphone 304 is used to capture sound and provide a representation of the sound to processor 308. The sound may be captured during operation of the camera 302, such as during capture of video. Sounds are also able to be captured independently of the operation of the camera 302. A sound detector circuit 310 is used to match features by comparing selected sound characteristics to characteristics stored in a sound database 314. The sound may be a human hand clap or a specific spoken word such as "Cheese". In general, sounds stored in the sound database 314 are selected to be long enough and distinct enough to provide a high degree of confidence that a particular sound has been identified in the sound signals captured by the microphone 304. In one example, identification of a stored sound is used to trigger recording an image by the camera 302. In this context, recording an image refers to preserving an image captured by the camera 302, such as by storing into a memory, transmitting the image over a communications link, or preserving the image for any other use.

In an example, the processor 308, in response to detecting an audio command such as a human hand clap, can signal the camera 302 to record an image, such as by providing an image capture trigger or operating a shutter release mechanism. In a further example, when a presence of a human face is detected in an image captured by the camera 302, the processor 316 6 sends a signal to the power control circuit 316 to turn on the front display 106 or the back display 206, or both. The display control 300 then waits to receive a hand clap or other audio command to further capture an image. This is particularly useful in group photos in which the time to get everyone lined up in front of the camera can vary widely. The time can be very long for large formal group portraits and shorter for candid shots of a couple. Once the facial detector 306 detects one or more faces, the group is allowed time to settle and then to "clap" or yell "cheese" or a combination thereof, to capture the image. Further examples include starting a count-down timer in response to the audio command being received. The current value of the count-down timer is also able to be displayed on the display that is on the same side as the camera being controlled such as the back display 324 when capturing images with the back facing camera 212. Upon expiration of the count-down timer in one example, the processor 308 signals the camera 302 to record a captured image.

In another example, when one or more human faces are detected, a centering algorithm is used. The relative position of each detected face in an image is detected along a given axes in a field of view of the camera 302. For example, if three faces are detected, the centering algorithm detects eyes or other facial features relative to the field of view of the camera. Once all the faces are centered along a given axis within the field of view, the image is automatically captured, recorded, or both. Stated differently, in a landscape mode, the eyes of each detected human must be within a settable position or distance along the horizontal axis from a centerline in the field of view. The typical pupillary distance (i.e. the distance between eyes) for adults is around 54-68 mm, while measurements generally fall between 48 and 73 mm. As an example using 70mm pupillary distance, a default settable distance (2.5 x 70 mm) from a center line in one example is that all eyes are within:

$$\text{Humans Centered} \leq 2.5 \text{ x } 70\text{mm x N,}$$

where N is the number of humans detected. In other examples, the centering algorithm can be combined with a count-down time or sound detector and the automatic turning on of the back display.

In another example, the processor 308 detects the presence of a human face in images captured by a back facing camera 212 with the facial detector 306. The processor 308 is configured to display the last recorded image on the front facing display 320, which is an example of a first display, or the back facing display 324, which is an example of a second display, or both. In an example, the front facing display 320 shows the previous captured and recorded image, while the back display 324 displays the live images being captured. This permits the user to quickly check previously captured images by flipping over the electronic device 120 without having to interfere with the presentation of live images on the back display 324, which is being used as a view finder by persons facing the lens of the camera.

Further examples cooperatively use the front display 320 and the back display 324 without incorporating facial detection. Rather, in such examples, the electronic device is placed in a camera mode through selection of one or more buttons on keyboard 116. The front display 320 acts as a live view finder for the front facing camera 112, which is the camera 302 in FIG. 3, when the front facing camera 112 is on. The back display 324 is then used to concurrently render the previously captured image.

Example Flow Diagram

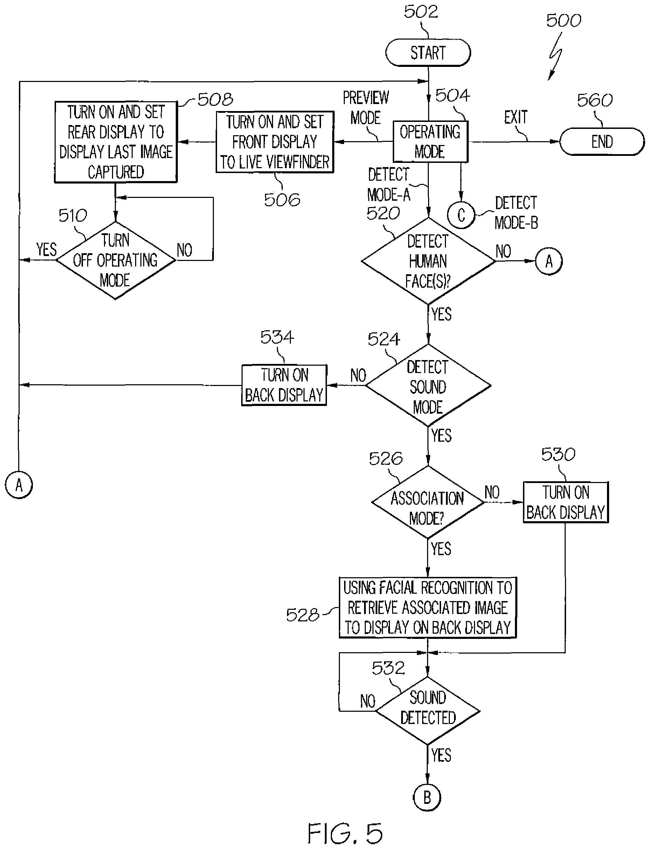

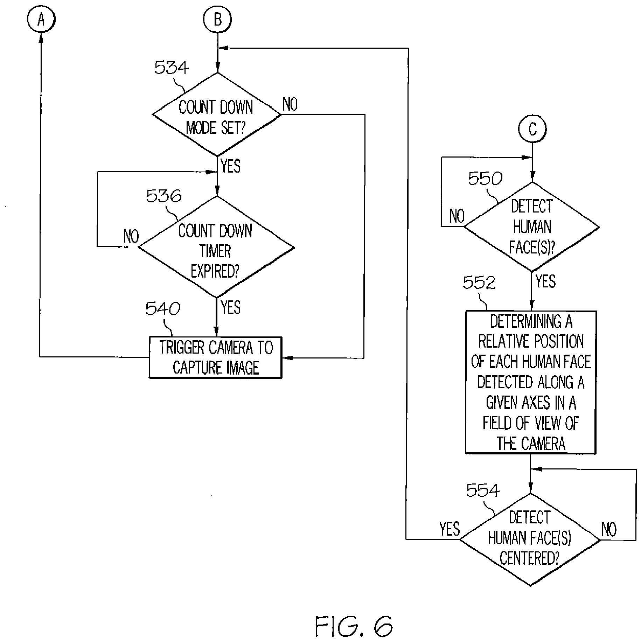

FIG. 5 and FIG. 6 are flow diagrams 500 and 600 illustrating a display management and image capture process. The process begins in step 502 and immediately proceeds to an operating mode selection, at 504. Shown are four paths related to user selection of a mode: "Preview Mode", "Detect Mode A", "Detect Mode B" and "Exit." Starting with the leftmost path in the flow diagram 500 is the "Preview Mode." In this mode the front display is set to turn on and render a live viewfinder, at 506, while the back display is set to turn on render the last image captured, at 508. The process proceeds to test, at 510, if this operating mode has been turned off. If the mode is not turned off, i.e., it is still enabled, the process loops on this test, at 510, otherwise, the process returns to determine the operating mode, at 504.

The first center path in the flow diagram 500 and 600 is "Detect Mode A". In this mode, the process determines, at 520, if a human face is detected in a captured image. If a human face is not detected, the process loops on determining the operating mode, at 504, and determining if a human face is detected, at 520. Once a human face is detected, a determination is made, at 524, whether detect sound mode is enabled.

In the case where detect sound mode is not enabled, the back display is turned on, at 534, and the process returns to determining operating mode, at 504. Otherwise, when the detect sound mode is enabled, a determination is made, at 526, if the association mode is enabled. When the association mode is enabled, facial recognition is used, at 528, to retrieve a stored image associated with the human face detected in the captured image. Otherwise, when the association mode is not enabled, the back display is turned on, at 530. In this example, the back display is on the same side as the camera being used to capture the images being processed, recorded, or both.

After using facial recognition or turning on the back display, a loop is entered, at 532, to determine if sound, such as a "clap" or a word "cheese," has been detected. Once the sound is detected, the process continues to flow 600 of FIG. 6 as denoted by "B." After sound has been detected, a determination is made, at 534, as to whether a count-down mode is set. In the case the count-down mode is not set, a trigger is sent, at 540, to the camera to capture the image. Otherwise, when the count-down mode is set, the process loops, at 536, until the count-down timer is expired.

After the count-down timer has expired, the image is captured and recorded, at 540. In one example the current value of the count-down timer is displayed on the back display. After the image is captured in response to the human face being detected, at540, along with other optional modes i.e. Detect Sound Mode, Association Mode, Count-Down Mode, the process returns to step 504.

The second center path in the flow diagram 500 and 600 is "Detect Mode B". In this mode, the process continues to flow 600 of FIG. 6 as denoted by " C " and " C' ". In this mode, the process loops, at 550, until at least one human face is detected in images captured by the camera. Once a human face is detected, a determination is made, at 552, of the relative position of each detected human face along a given axes in a field of view of the camera. Next, a loop is entered, at 554, that is performed until the detected face(s) are centered along the given axes within the field of view. Once the faces are centered, the image is ready to be captured and the optional Count-down Timer mode is tested, at 554, and the process continues to await count-down timer expiration, at 536, or to trigger image capture and recording, at 540, as is described above.

Lastly, the right most path in the flow diagram 500 is "Exit" and the process terminates in step 560,

<u>Example Hardware of an Electronic Device</u>

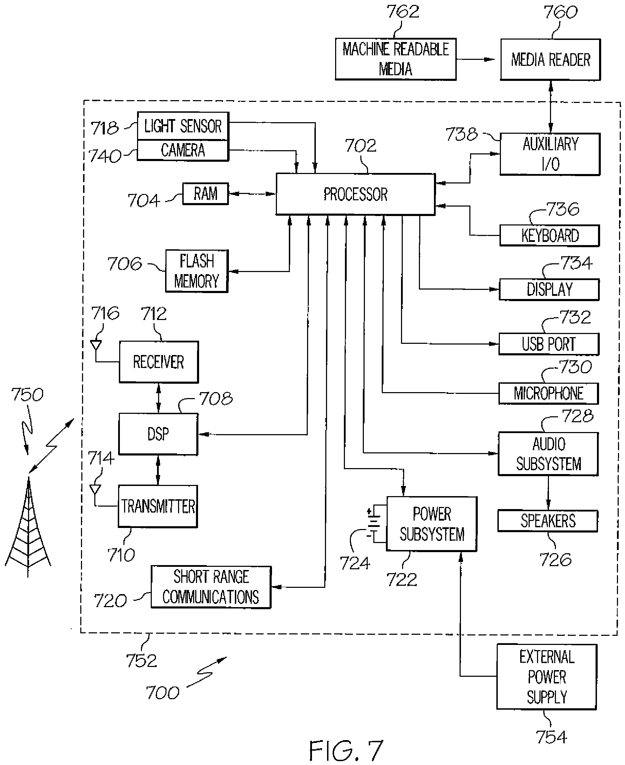

FIG. 7 is a block diagram of an electronic device and associated components 700 in which the systems and methods disclosed herein may be implemented. In this example, an electronic device 752 is a wireless two-way communication device that is able to provide one or both of voice and data communication capabilities. Such electronic devices communicate with a wireless voice or data network 750 via any suitable wireless communication protocol or protocols. Wireless voice communication is performed using either analog or digital wireless communication protocols according to the network 750 to which the wireless communication device is connected. Data communication to and from the electronic device 752 support exchanging data with other computer systems through any suitable network, such as the Internet. Examples of electronic devices that are able to incorporate the above described systems and methods include data pagers, data messaging devices, cellular telephones, or a data communication device that may or may not include telephony capabilities.

The illustrated electronic device 752 is an example electronic wireless communication device includes two-way wireless communication components to provide wireless data communication with a wireless data network, a wireless voice network, or both. Such electronic devices incorporate a wireless communication component that includes communication subsystem elements such as a wireless transmitter 710, a wireless receiver 712, and associated components such as one or more antenna elements 714 and 716. A digital signal processor (DSP) 708 performs processing to extract data from received wireless signals and to generate signals to be transmitted. The particular design of the communication subsystem is dependent upon the communication network and associated wireless communication protocols with which the device is intended to operate.

Data communication with the electronic device 752 generally includes receiving data, such as a text message or web page download, through the receiver 712 and providing that received data to the processor 702. The processor 702 is then able to further process the received data for output to the display 734 or to other devices such as an auxiliary I/O device 738 or through the Universal Serial Bus (USB) port 732. The electronic device 752 also allows a user to create data items, such as e-mail messages, using the keyboard 736 in conjunction with the display 734 and possibly with data received through an auxiliary I/O device 738. Such composed items are then able to be transmitted over a communication network through the transmitter 710.

The electronic device 752 performs voice communications by providing received signals from the receiver 712 to the audio subsystem 728 for reproduction by speakers 726. A user's voice is able to be converted to electrical signals from microphone 730 for transmission by transmitter 710.

A short-range communication subsystem 720 provides communication between the electronic device 752 and different systems or devices. Examples of short-range communication subsystems 720 include an infrared device and associated circuits and components, or a Radio Frequency based communication subsystem such as a BLUETOOTH®, ZIGBEE®, Wi-Fi or Wi-MAX communication subsystem to provide for communication with similarly-enabled systems and devices.

The electronic device 752 includes a processor 702 that controls device operations for the electronic device 752. The processor 702 interacts with the above described communication subsystem elements to implement and control wireless communication with the network 750. The processor 702 further performs control and data exchange functions by interacting with, for example, flash memory 706, random access memory (RAM) 704, auxiliary input/output (I/O) device 738, Universal Serial Bus (USB) Port 732, display 734, light sensor 718, camera 740, keyboard 736, audio subsystem 728, microphone 730, a short-range communication subsystem 720, a power subsystem 722, and any other device subsystems.

Light sensor 718 and camera 740 in one example correspond to the light sensor 304 and camera 302, respectively, discussed above. The processor 702 of one example performs the functions of the ambient light processor 306, ambient light level detector 308 and image generation processor 312. Display 734 in one example corresponds to the display 320 or 324 or both also discussed above.

The processor 702, in another example, performs the facial detection 306 with facial database 312. The processor 703 may also be configured to perform the sound detection 310 with sound database 314.

An internal power pack, such as a battery 724, is connected to a power subsystem 722 to provide power to the circuits of the electronic device 752. The power subsystem 722 includes power distribution circuitry to supply electric power to the various components of the electronic device 752 and also includes battery charging circuitry to support recharging the battery 724. An external power supply 754 is able to be connected to the power subsystem 722. The power subsystem 722 includes a battery monitoring circuit that provide a status of one or more battery conditions, such as remaining capacity, temperature, voltage, current draw, and the like.

The USB port 732 provides data communication between the electronic device 752 and one or more external devices. Data communication through USB port 732 enables various user data, such as data files or configuration parameters for the electronic device 752 to be exchanged between the electronic device 752 and an external device. The USB port 732 is also able to be used to convey external power to the power subsystem 722 from a suitable external power supply.

Operating system software used by the processor 702 is stored in flash memory 706. In addition to, or in place of, flash memory 706, a battery backed-up RAM or other non-volatile storage data elements are able to store operating systems, other executable programs, or both. As an example, a computer executable program configured to perform the display cooperation process 500, 600, as described above, is included in a software module stored in flash memory 706.

Flash memory 706 is also able to store data that is used by programs executing on the processor 702. RAM memory 704 is also used to store data produced or used by processor 702. RAM memory is further able to temporarily store program data from flash memory 706 or from other storage locations. RAM 704 is also used to store data received via wireless communication signals or through wired communication.

The processor 702, in some examples executes operating system software as well as various other software applications such as user applications, small, special purpose applications referred to as "apps," and the like. Some software, such as operating system and other basic user functions such as address books are able to be provided as part of the manufacturing process for the electronic device.

In addition to loading applications as part of a manufacturing process, further applications are able to be loaded onto the electronic device 752 through, for example, the wireless network 750, an auxiliary I/O device 738, USB port 732, short-range communication subsystem 720, or any combination of these interfaces. Once these applications are loaded into the electronic device 752, these applications are executed by the processor 702.

A media reader 760 is able to be connected to an auxiliary I/O device 738 to allow, for example, loading computer readable program code of a computer program product into the electronic device 752 for storage into flash memory 706. One example of a media reader 760 is an optical drive such as a CD/DVD drive, which may be used to store data to and read data from a computer readable medium or storage product such as computer readable storage media 762. Examples of suitable computer readable storage media include optical storage media such as a CD or DVD, magnetic media, or any other suitable data storage device. The media reader 760 is alternatively able to be connected to the electronic device through the USB port 732 or computer readable program code is alternatively able to be provided to the electronic device 752 through the wireless network 750.

Non- Limiting Examples

The present invention can be realized in hardware, software, or a combination of hardware and software. A system can be realized in a centralized fashion in one computer system, or in a distributed fashion where different elements are spread across several interconnected computer systems. Any kind of computer system - or other apparatus adapted for carrying out the methods described herein - is suitable.

The present invention can also be embedded in a computer program product, which comprises all the features enabling the implementation of the methods described herein, and which - when loaded in a computer system - is able to carry out these methods. Computer program in the present context means any expression, in any language, code or notation, of a set of instructions intended to cause a system having an information processing capability to perform a particular function either directly or after either or both of the following a) conversion to another language, code or, notation; and b) reproduction in a different material form.

Each computer system may include, inter alia, one or more computers and at least a computer readable medium allowing a computer to read data, instructions, messages or message packets, and other computer readable information from the computer readable medium. The computer readable medium may include computer readable storage medium embodying non-volatile memory, such as read-only memory (ROM), flash memory, disk drive memory, CD-ROM, and other permanent storage. Additionally, a computer medium may include volatile storage such as RAM, buffers, cache memory, and network circuits. Non-Limiting Examples

Although specific examples of the invention have been disclosed, those having ordinary skill in the art will understand that changes can be made to the specific examples without departing from the spirit and scope of the invention. The scope of the invention is not to be restricted, therefore, to the specific examples, and it is intended that the appended claims cover any and all such applications, modifications, and examples within the scope of the present invention.

**Claims**

1.  An electronic device (100) comprising:

    a camera (212);
    a first display (106);
    a second display (206);
    a housing (102) with a first side (104) and a second side (204), the first side (104) including at least the first display (106) and the second side including the camera (212) communicatively coupled to the first display and at least a second display communicatively coupled to the camera;
    a facial detector (316, FIG. 5, FIG. 6), communicatively coupled to the camera (212), configured to detect at least one human face in an image captured by the camera (212); and
    a power control circuit (316, FIG. 5, FIG. 6), communicatively coupled to the facial detector (306, FIG. 5, FIG. 6), configured to turn on the second display in response to receiving a signal from the facial detector (306, FIG. 5, FIG. 6)indicating detection of the at least one human face.

2.  The electronic device (100) of claim 1, further comprising:

    a memory (704, 706) storing images; and
    a processor (702) communicatively coupled to the memory and the facial detector, the processor configured to:

    retrieve, in response to receiving the signal, a stored image associated with the at least one human face; and
    display the stored image on the second display (206).

3.  The electronic device (100) of claim 2, wherein the stored image comprises an image with a human face.

4.  The electronic device (100) of claim 2, further comprising a count-down timer, wherein the processor is further configured to trigger the camera (212) to record an image captured after the count-down timer has expired, and wherein the second display (206) is configured to display a present value of the count-down timer.

5.  The electronic device (100) of claim 1, further comprising:

    a processor (702) configured to determine a relative position along a given axes in a field of view of the camera (212) of each of the at least one human face.

6.  The electronic device (100) of claim 1, further comprising:

    a memory (704, 706) storing images;
    a processor (702) communicatively coupled to the memory, the processor configured to:

    detect, in response to receiving the signal, receipt of at least one audio command;

    and
    instruct the camera (212) to record an image in response to the processor detecting the at least one audio command.

7.  The electronic device (100) of claim 6, wherein the audio command is a human hand clap.

8.  The electronic device (100) of claim 6, further comprising a count-down timer, wherein the processor is further configured to:

    start the count-down timer in response to receiving the signal; and
    instruct the camera (212) to record an image after the count-down timer that is started in response to receiving the signal has expired.

9. The electronic device (100) of claim 8, wherein a current value of the count-down timer is displayed on the second display (206).

10. A method of display management and image capture, the method comprising:

detecting at least one human face in an image captured by a camera (212); and
turning on a second display (206) in response to detecting the at least one human face, the second display (206) being mounted on a housing (102) with a first side (104) and a second side (204), the first side (104) including at least a first display (106) and the second side (204) including the camera (212) and the second display (206).

11. The method of claim 10, further comprising:

retrieving, in response to detecting the at least one human face, a stored image associated with the at least one human face; and
displaying the stored image on the second display (206).

12. The method of claim 10, further comprising:

recording an image captured by the camera (212) after a count-down timer has expired; and
presenting a present value of the count-down timer on the second display (206).

13. The method of claim 10, further comprising:

determining a relative position along a given axes in a field of view of the camera (212) of each of the at least one human face.

14. The method of claim 10, further comprising:

detecting, in response to detecting the at least one human face, receipt of at least one audio command; and
instructing, in response to detecting the at least one audio command, the camera (212) to record an image.

15. The method of claim 14, wherein the audio command is a human hand clap.

**Amended claims in accordance with Rule 137(2) EPC.**

**1.** An electronic device (100) comprising:

a camera (212);
a first display (106);
a second display (206);
a housing (102) with a first side (104) and a second side (204), the first side (104) including at least the first display (106) and the second side including the camera (212) communicatively coupled to the first display and at least a second display communicatively coupled to the camera;
a facial detector (316, FIG. 5, FIG. 6), communicatively coupled to the camera (212), configured to detect at least one human face in an image captured by the camera (212); and
a power control circuit (316, FIG. 5, FIG. 6), communicatively coupled to the facial detector (306, FIG. 5, FIG. 6), configured to turn on the second display in response to receiving a signal from the facial detector (306, FIG. 5, FIG. 6)indicating detection of the at least one human face.

**2.** The electronic device (100) of claim 1, further comprising:

a memory (704, 706) storing images; and
a processor (702) communicatively coupled to the memory and the facial detector, the processor configured to:

retrieve, in response to receiving the signal, a stored image associated with the at least one human face; and

display the stored image on the second display (206).

**3.** The electronic device (100) of claim 2, wherein the stored image comprises an image with a human face.

**4.** The electronic device (100) of claim 2, further comprising a count-down timer, wherein the processor is further configured to trigger the camera (212) to record an image captured after the count-down timer has expired, and wherein the second display (206) is configured to display a present value of the count-down timer.

**5.** The electronic device (100) of claim 1, further comprising:

a processor (702) configured to:

determine a relative position along a given axis in a field of view of the camera (212) of each of the at least one human face; and
instruct the camera (212) to record an image in response to determining that the relative position of each of the at least one human face is centered along the given axis in the field of view.

**6.** The electronic device (100) of claim 5, wherein the relative position is determined based on eyes of each of the at least one human face being within a settable distance along the given axis from a centerline in the field of view.

**7.** The electronic device (100) of claim 1, further comprising:

a memory (704, 706) storing images;
a processor (702) communicatively coupled to the memory, the processor configured to:

detect, in response to receiving the signal, receipt of at least one audio command;

and
instruct the camera (212) to record an image in response to the processor detecting the at least one audio command.

**8.** The electronic device (100) of claim 6, further comprising a count-down timer, wherein the processor is further configured to:

start the count-down timer in response to receiving the signal; and
instruct the camera (212) to record an image after the count-down timer that is started in response to receiving the signal has expired.

**9.** The electronic device (100) of claim 8, wherein a current value of the count-down timer is displayed on the second display (206).

**10.** A method of display management and image capture, the method comprising:

detecting at least one human face in an image captured by a camera (212); and
turning on a second display (206) in response to detecting the at least one human face, the second display (206) being mounted on a housing (102) with a first side (104) and a second side (204), the first side (104) including at least a first display (106) and the second side (204) including the camera (212) and the second display (206).

**11.** The method of claim 10, further comprising:

retrieving, in response to detecting the at least one human face, a stored image associated with the at least one human face; and
displaying the stored image on the second display (206).

**12.** The method of claim 10, further comprising:

recording an image captured by the camera (212) after a count-down timer has expired;

and
presenting a present value of the count-down timer on the second display (206).

**13.** The method of claim 10, further comprising:

determining a relative position along a given axis in a field of view of the camera (212) of each of the at least one human face; and
instructing the camera (212) to record an image in response to determining that the relative position of each of the at least one human face is centered along the given axis in the field of view.

**14.** The method of claim 13, wherein the relative position is determined based on eyes of each of the at least one human face being within a settable distance along the given axis from a centerline in the field of view.

**15.** The method of claim 10, further comprising:

detecting, in response to detecting the at least one human face, receipt of at least one audio command; and
instructing, in response to detecting the at least one audio command, the camera (212) to record an image.

FIG. 2

FIG. 1

FIG. 3

402 404

| FACIAL IDENTIFICATION | ASSOCIATED PICTURE(S) |
|---|---|
| GRANDMA | • GRANDCHILDREN<br>• PET<br>• VACATION SPOT<br>• GRANDMA WITH GRANDCHILDREN |
| DAD | • MOM<br>• AWARD |
| BABY | ANIMATED CARTOON |
| . . . | . . . |

416
418
420

FIG. 4

FIG. 5

FIG. 6

FIG. 7

| | Europäisches Patentamt<br>European Patent Office<br>Office européen des brevets | **EUROPEAN SEARCH REPORT** | Application Number<br>EP 12 15 8883 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/134269 A1 (KIM JIN-DONG [KR]) 9 June 2011 (2011-06-09) | 1-3,10, 11 | INV.<br>H04N5/232 |
| Y | * the whole document * | 4-9, 12-15 | |
| | ----- | | |
| Y | EP 1 633 131 A2 (NIPPON KOGAKU KK [JP]) 8 March 2006 (2006-03-08)<br>* paragraph [0034]; figure 10 * | 4,12 | |
| | ----- | | |
| Y | US 2012/002075 A1 (YOSHIZUMI SHINGO [JP] ET AL) 5 January 2012 (2012-01-05)<br>* paragraphs [0242], [0259], [0277] - [0296] * | 5-9, 13-15 | |
| | ----- | | |

| | | | | TECHNICAL FIELDS SEARCHED (IPC) |
|---|---|---|---|---|
| | | | | H04N |

The present search report has been drawn up for all claims

| Place of search | Date of completion of the search | Examiner |
|---|---|---|
| Munich | 21 June 2012 | Rolet, Etienne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 15 8883

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2012

| Patent document cited in search report | | | Publication date | Patent family member(s) | | | Publication date |
|---|---|---|---|---|---|---|---|
| US 2011134269 | A1 | | 09-06-2011 | CN | 102088561 | A | 08-06-2011 |
| | | | | KR | 20110062991 | A | 10-06-2011 |
| | | | | US | 2011134269 | A1 | 09-06-2011 |
| EP 1633131 | A2 | | 08-03-2006 | EP | 1633131 | A2 | 08-03-2006 |
| | | | | JP | 2006101466 | A | 13-04-2006 |
| | | | | US | 2006050151 | A1 | 09-03-2006 |
| | | | | US | 2009303352 | A1 | 10-12-2009 |
| US 2012002075 | A1 | | 05-01-2012 | CN | 102316269 | A | 11-01-2012 |
| | | | | JP | 2012015949 | A | 19-01-2012 |
| | | | | US | 2012002075 | A1 | 05-01-2012 |

EPO FORM P0459

For more details about this annex : see Official Journal of the European Patent Office, No. 12/82